# EUROPEAN PATENT SPECIFICATION

(11) **EP 1 308 611 B1**
(45) Date of publication and mention of the grant of the patent: **08.12.2010**
(21) Application number: 02257234.1
(22) Date of filing: 17.10.2002
(51) Int. Cl.: F02C 7/25, F02C 7/32, F01D 9/06

(54) **Firewall for gas turbine engines**
Feuerschott für Gasturbinen
Cloison pare-feu pour turbines à gaz

(30) Priority: 02.11.2001 GB 0126371
(43) Date of publication of application: 07.05.2003
(73) Proprietor: ROLLS-ROYCE PLC, London, SW1E 6AT (GB)
(72) Inventor: Cazenave, Olivier Jean-François, Derby DE3 5AQ (GB); Sherlock, Robert Edward, Derby DE22 2TH (GB); Clark, Tim Andrew, Pontefract WF8 3HZ (GB)
(74) Representative: Barcock, Ruth Anita

(56) References cited:
- EP-A- 1 067 282
- US-A- 4 437 627
- US-A- 5 174 110

## Description

The invention relates to gas turbine engines for aircraft and particularly to the routing of pipes and harnesses within such engines.

Gas turbine engines are divided into a number of 'fire zones', the different fire zones tending to operate at respectively different temperatures when the engine is functioning, and being separated by 'fire walls'. The fire walls prevent any flammable fluid leakage between the various zones and help to prevent the spread of a fire from one zone to another.

Typically, the core region of the engine comprises one or two zones, normally referred to as Zones 2 and 3, and the region outside the fan case constitutes a separate zone, referred to as Zone 1. There is also a bypass zone in the region in which bypass air flows, between the core and the fan case.

Zone 3 is located generally radially inwards of Zone 1. However, typically Zone 3 is extended radially outwardly and downwardly into the general area of Zone 1, for a limited circumferential extent, in a lower region of the engine. This extended zone 3 region forms a "bifurcation", because bypass air is forced to pass around it, the air being directed by a splitter fairing.

It is necessary for pipes and harnesses to pass from the core region, for example from Zone 3, to the fan case region (Zone 1). At a base of the extended Zone 3 region, there is a 'bifurcation disconnect panel' through which all the pipes and harnesses extending from Zone 3 to Zone 1 pass. This panel forms a fire wall and allows the pipes and harnesses to be disconnected at the panel or removed from the panel for line replacement.

For engines with fan case mounted accessories, power for the accessories of the engine, for example the electrics, the hydraulic pump, the oil and fuel pumps, etc. is provided by a generator which is driven from the high pressure turbine shaft but which is mounted on the fan case in Zone 1. It is thus necessary to provide a drive means between the high pressure turbine drive shaft and the fan case, this drive means passing from Zone 3 to Zone 1. This is termed the radial drive. The radial drive must therefore pass through the bifurcation disconnect panel.

The above described prior art arrangement has certain disadvantages. The pipes and harnesses are usually required to cross the fire wall at a right-angle. There are also requirements for a minimum straight section before and after the disconnect region where the pipes and harnesses cross the panel, as well as a minimum bend radius. These constraints affect the pipe and harness routing, creating unnecessary bends. The resulting intricate design makes clashes more likely and harder to detect during design and makes modifications from an original design more difficult to accommodate and unnecessarily complex. The routing of the pipes and harnesses appears untidy and is therefore difficult to follow and likely to cause confusion and reduce accessibility for maintenance. It is also necessary to provide large numbers and various different types of brackets, lugs and clips to hold the pipes and harnesses. This increases the manufacturing costs and increases the removal/refit time.

A further disadvantage of the prior art arrangement relates to the routing of the radial drive. Currently, there is a D-seal between a radial drive shroud and the bifurcation disconnect panel. This causes various problems. Firstly, the fan excitation of the splitter fairing, as well as the relative movement between the core and the fan case, cause the D-seal to wear out quickly. For similar reasons, an O-ring seal provided between the radial drive shroud and the transfer gearbox has been known to fail in service, producing oil leakage. Secondly, the size of the D-seal support dictates how closely the splitter fairing can be wrapped around the radial drive. A larger splitter fairing is less aerodynamically efficient than a small one.

US5,174,110 discloses a gas turbine engine having a removable protective modular enclosure housing a plurality of conduits and bridging a bypass duct between the engine's core and fan case.

According to the invention there is provided a gas turbine engine including:
a first fire zone in the region of a core of the engine and a second fire zone in the region of a fan case of the engine, the first and second fire zones being separated by fire walls;
wherein the first fire zone is located generally radially inwardly of the second fire zone but includes a bifurcation part which extends radially outwardly of the remainder of the zone for a limited circumferential extent;
the engine (10) further includes a disconnect panel (52) mounted on the fan case (32) to extend radially outwardly therefrom, **characterised in that** the disconnect panel (52) comprises angled portions (56, 58) and forms a fire wall between the first and second zones and also forms a mounting and a disconnect means for pipes and harnesses (44) to cross the disconnect panel (52) at an angle of approximately 90°.

Preferably the disconnect panel forms a fire wall between the second fire zone and the bifurcation part of the first fire zone.

Preferably the disconnect panel is mounted to extend downwardly from the fan case, when the engine is in its normal orientation as mounted on an aircraft.

The disconnect panel may be mounted on a rear part of the fan case.

The disconnect panel may include side portions which are preferably planar and which are preferably angled at between 30° and 60° to the axial direction of the engine. Most preferably, the side portions are angled at between 40° and 50° to the axial direction of the engine. The side portions preferably each lie in a respective generally vertical plane.

The disconnect panel may further include a mid-portion which joins the side portions. The mid-portion may also be planar and is preferably oriented at about 90° to the axial direction of the engine. Preferably the mid-portion also lies in a generally vertical plane.

The disconnect panel may further include a mounting portion which may be adapted for attachment to the fan case. The mounting portion may extend forward from the mid-portion at a top of the member and may lie in a plane which is generally perpendicular to the plane of the mid-portion. The mounting portion may be slightly curved and may be of a complementary shape to the fan case.

The disconnect panel may comprise a sheet material which may be steel or titanium. Preferably the thickness of the material is at least 1mm and most preferably the thickness is at least 0.4mm.

The gas turbine engine may further include a radial drive connecting a turbine drive shaft to a gearbox mounted on the fan case. Preferably the radial drive passes through the fan case. Preferably a bellow-seal is provided between the radial drive and the fan case. The bellow-seal may be secured on to the radial drive shroud by a jubilee clip. The bellow-seal may be connected to the fan case through a bolted flange. The bellow-seal may be provided with a ring having a spigot providing a hard surface for bolting to the fan case. Preferably the seal allows the radial drive to move relative to the fan case. Preferably the seal is also fireproof.

An embodiment of the invention will be described for the purpose of illustration only with reference to the accompanying drawings in which:
Fig. 1 is a diagrammatic sectional view showing the general arrangement of a known gas turbine engine;
Fig. 2 is a more detailed sectional view of a gas turbine engine, illustrating the various different fire zones, according to the prior art;
Fig. 3 is a diagrammatic illustration of a bifurcation disconnect panel according to the prior art;
Fig. 4 is a diagrammatic side view illustrating the general arrangement of the invention;
Fig. 5 is a diagrammatic perspective view illustrating a disconnect panel according to the invention;
Fig. 6 is a diagrammatic bottom view illustrating the disconnect panel according to the invention; and
Fig. 7 is a diagrammatic view from the front, illustrating the disconnect panel according to the invention.

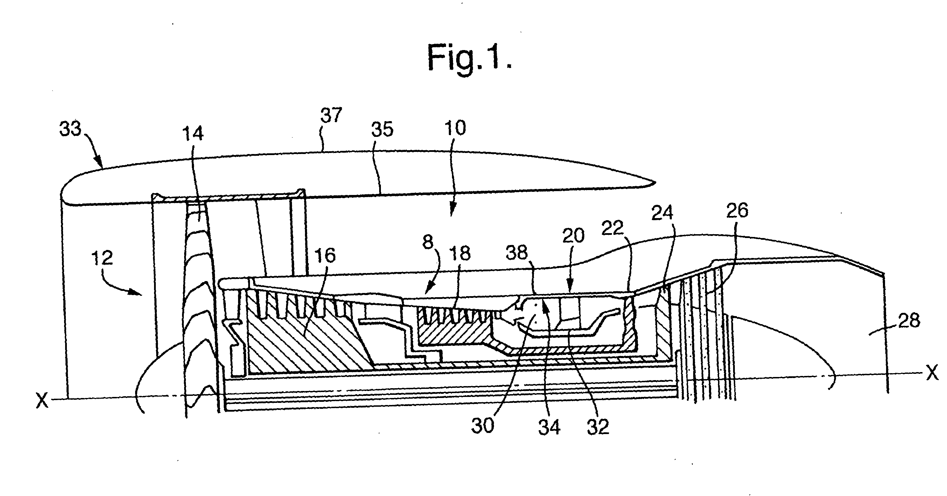

With reference to Fig. 1 a ducted fan gas turbine engine generally indicated at 10 comprises, in axial flow series, an air intake 12, a propulsive fan 14, an intermediate pressure compressor 16, a high pressure compressor 18, combustion equipment 20, a high pressure turbine 22, an intermediate pressure turbine 24, a low pressure turbine 26 and an exhaust nozzle 28.

The gas turbine engine 10 works in the conventional manner so that air entering the intake 12 is accelerated by the fan 14 to produce two air flows, a first air flow into the intermediate pressure compressor 16 and a second airflow of "bypass air" which provides propulsive thrust. The bypass air flows within a nacelle 33 which surrounds part of the engine including the propulsive fan 14. The nacelle 33 is defined by radially inner and outer walls 35, 37 respectively. The intermediate pressure compressor 16 compresses the air flow directed into it before delivering the air to the high pressure compressor 18 where further compression takes place.

The compressed air exhausted from the high pressure compressor 18 is directed into the combustion equipment 20 where it is mixed with fuel and the mixture combusted. The resultant hot combustion products then expand through and thereby drive the high, intermediate and low pressure turbines 22, 24 and 26 before being exhausted through the nozzle 28 to provide additional propulsive thrust. The high, intermediate and low pressure turbines 22, 24 and 26 respectively drive the high and intermediate pressure compressors 16 and 18 and the fan 14 by suitable interconnecting shafts.

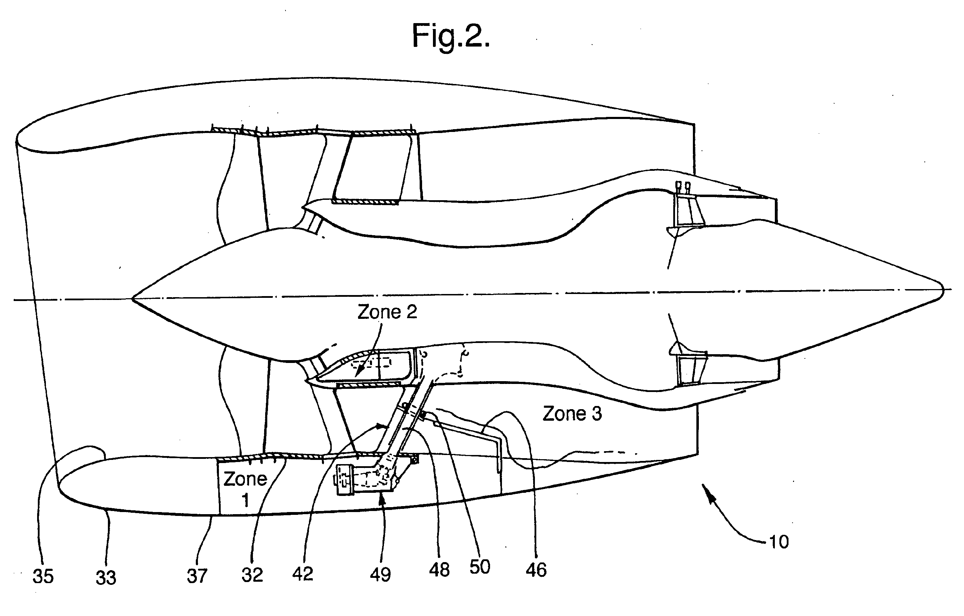

Fig. 2 illustrates the gas turbine engine 10 in somewhat more detail. It may be seen that the engine 10 includes a fan case 32 which defines an outer boundary of a bypass zone through which the bypass air passes. Generally externally of the fan case 32 and between the walls 35, 37 there is defined a further fire zone, Zone 1 and near to the core of the engine there are defined two further, hotter zones, Zones 2 and 3.

Each zone is separated from the adjacent zones by a fire wall. The fire walls prevent flammable fluid leaking between the zones and help prevent the spread of a fire starting in one of the zones.

Zone 3 is generally located radially inwardly of Zone 1. However, for a circumferentially limited extent at the base of the engine, Zone 3 is extended radially outwardly into Zone 1. The cross section of Fig. 2 has been taken approximately vertically through a centre of the engine and therefore through this radially extended Zone 3 region. A splitter fairing 42 divides and deflects the bypass air such that it passes smoothly around the downwardly extending Zone 3 region.

Referring again to Fig. 2, it is necessary for pipes and harnesses to pass from the core region (Zone 3) to the fan case 32 region (Zone 1). In the prior art arrangement, the pipes and harnesses pass through a bifurcation disconnect panel 46 which defines a radially outer base of the extended Zone 3 region. The bifurcation disconnect panel 46 forms a fire wall between Zones 1 and 3 and forms a mounting for the pipes and harnesses. The pipes and harnesses may also be disconnected from the panel 46.

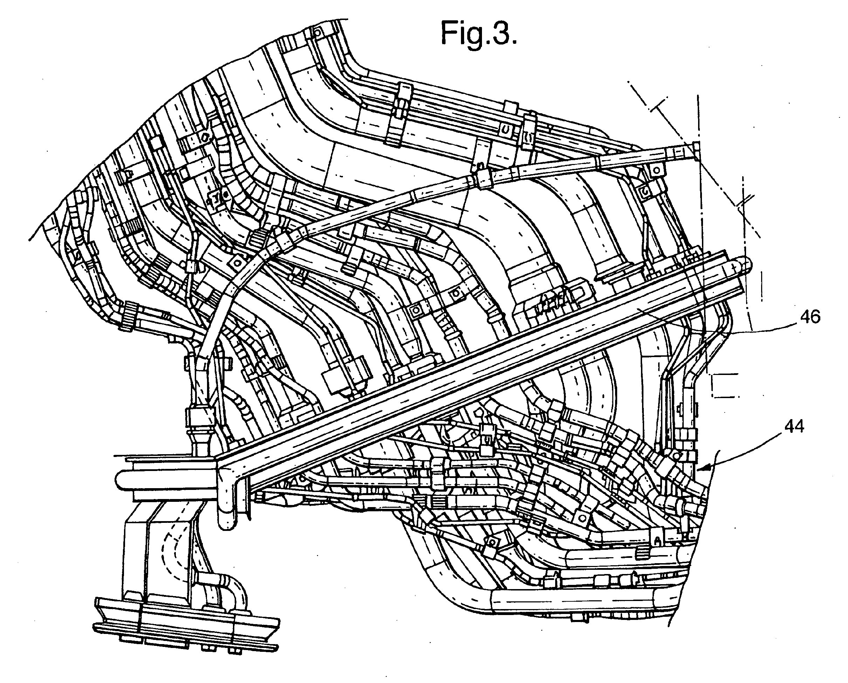

Fig. 3 illustrates the disconnect panel 46 in more detail. It may be seen that the pipes and harnesses 44 cross the disconnect panel 46 substantially perpendicularly thereto. There is also a requirement for a minimum straight section before and after the disconnect region where the pipes/harnesses 44 cross the panel, as well as a minimum bend radius. This results in an intricate and complex design, as may be seen from Fig. 3.

Referring again to Fig. 2, a radial drive 48 also passes through the bifurcation disconnect panel 46. The radial drive 48 transfers power from the high pressure turbine shaft to a gearbox 49 mounted on the fan case 32 in Zone 1. A D-seal 50 is provided between the radial drive 48 and the bifurcation disconnect panel 46. Although a D-seal 50 is preferred the seal 50 may be generally P-shaped or any other shape as known in the art.

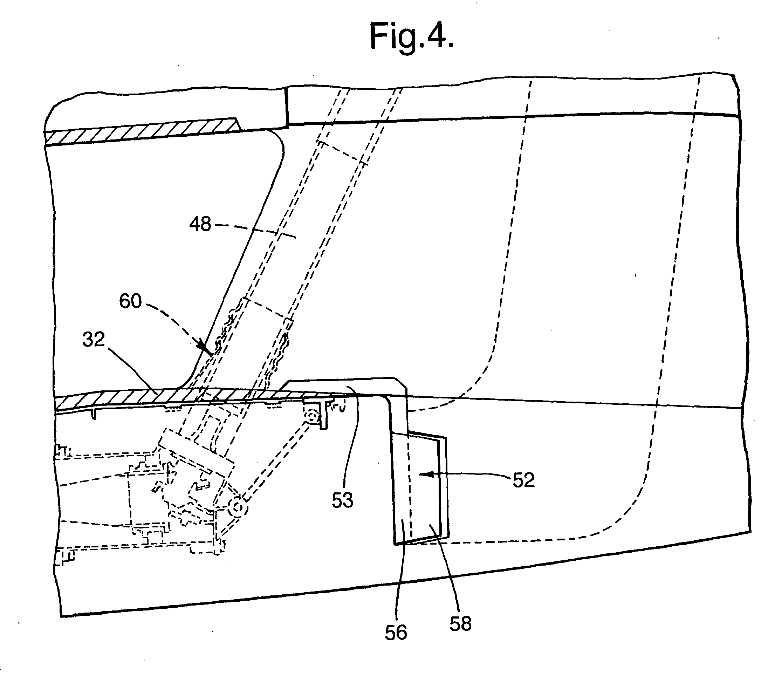

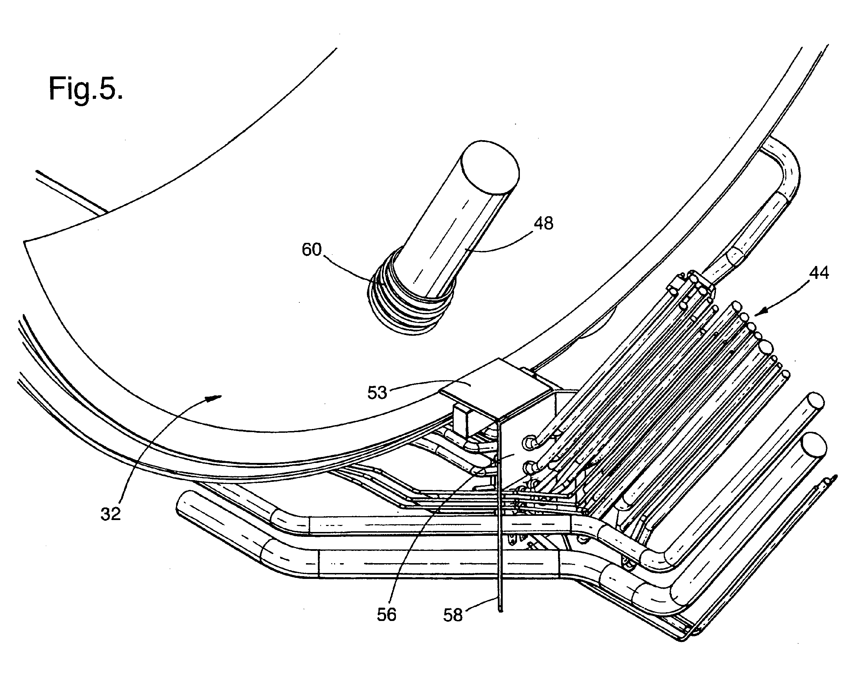

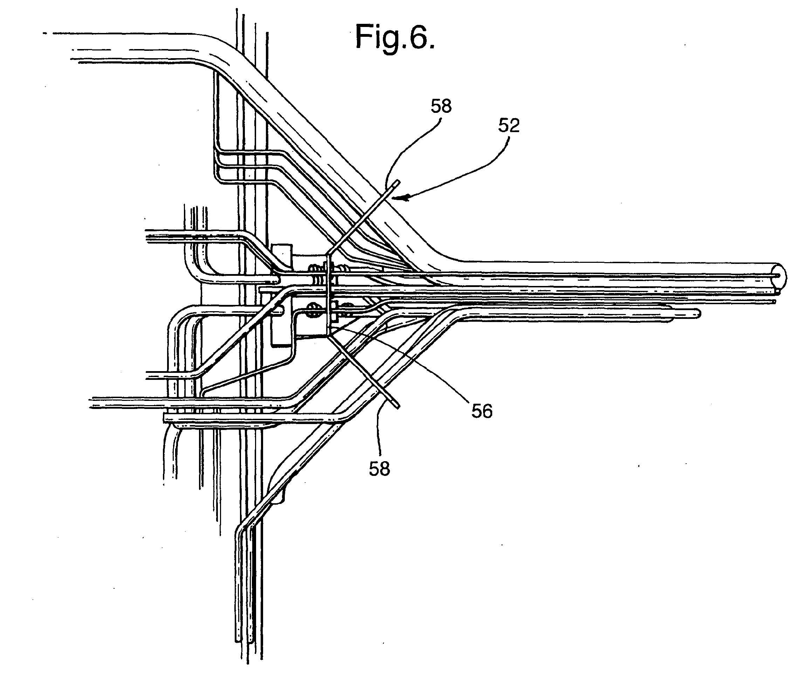

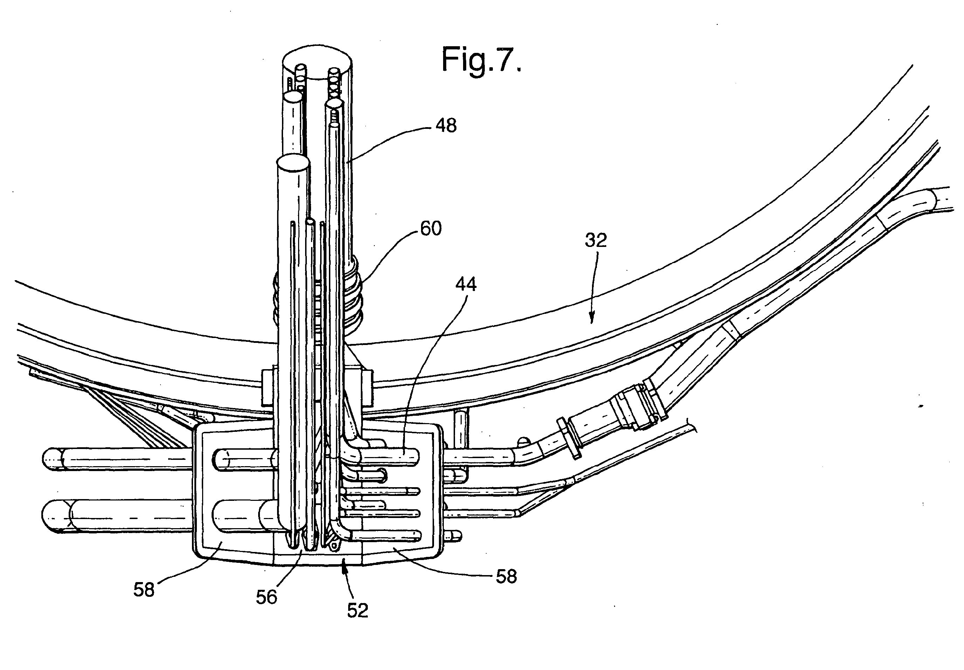

Referring to Figs. 4 to 7, there is illustrated a member in the form of a disconnect panel 52 which replaces the bifurcation disconnect panel 46 of the prior art. The disconnect panel 52 is mounted on the fan case 32 so as to extend downwardly and radially outwardly therefrom.

The disconnect panel 52 includes a mounting portion 53 which is adapted to be mounted on the fan case 32, the mounting portion being either generally planar or curved in a complementary way with the fan case 32. Extending downwardly from the mounting portion is a generally planar centre portion 56 which is approximately rectangular. Extending from each outer edge of the centre portion 56 is a side portion 58, each side portion 58 also being generally planar and rectangular. The side portions 58 are oriented at an angle of approximately 40° to 50° to the axial direction of the engine. Each portion of the disconnect panel 52 is made from a sheet material such as steel or titanium. The thickness of the sheet material is about 0.4 to 0.5mm. The disconnect panel 52 is able to withstand 1100°c for 15 minutes with a standard flame producing 116k W/m²±10kW/m².

The disconnect panel 52 is so positioned and shaped that the side portions 58 lie across a natural route for most of the pipes and harnesses 44 passing from Zone 3 to Zone 1 and the centre portion 56 lies on a natural route for the remainder of the pipes and harnesses 44. The disconnect panel 52 forms a fire wall between Zones 1 and 3 and also forms a mounting and a disconnect means for the pipes and harnesses 44. Because the side and centre portions 58 and 56 lie across a natural route for the pipes and harnesses 44, routing is straightforward and it is easy to ensure that the pipes cross the disconnect panel 52 at the correct angle of approximately 90°.

The use of the above disconnect panel 52 therefore eliminates prior art constraints on routing, allowing a tidy layout to be achieved during design. This eases design and re-design, clashes are more likely to be avoided and access to and identification of pipes and harnesses 44 is more simple. There is also the scope to improve the clipping of pipes and harnesses 44, as clamp blocks can be accommodated. Furthermore, one type of clamp can be used in several locations since all the pipes are parallel. This reduces the amount of additional clips used, which results in shorter assembly and removal time and lower pipe costs.

The location of the disconnect panel 52 at the bottom of the lower bifurcation area also allows for better sealing between Zones 1 and 3. In particular, the radial drive 48 may pass through and be sealed against the fan case 32 near to the lower end of the radial drive, where efficient sealing is easier to achieve. Referring in particular to Figs. 4, 5 and 7, the radial drive 48 may be sealed with a bellow seal 60 which enables the radial drive to move freely relative to the fan case 32. Vibration from excitation to the splitter fairing 42 will therefore not be fed to the radial drive 48. Further, as the bellow seal 60 does not prevent free displacement of the radial drive 48 locally, any difficulties with an O-ring seal provided between the radial drive 48 and the transfer gear-box disappear. Finally, the bellow seal 60 allows a reduction of the gap between the splitter fairing 42 and the radial drive 48 which improves the aerodynamics of the engine.

Various modifications may be made to be above described embodiment without departing from the scope of the claims. In particular, the shapes of the various components may be modified as may the materials from which they are constructed.

## Claims

1. A gas turbine engine (10) including a first zone (Zone 3) in the region of a core of the engine (10) and a second fire zone (Zone 1) in the region of a fan case (32) of the engine (10) the first (Zone 3) and second (Zone 1) fire zones being separated by fire walls; the first fire zone (Zone 3) is located generally radially inwardly of the second fire zone (Zone 1) but includes a bifurcation part which extends radially outwardly of the remainder of the zone for a limited circumferential extent; the engine (10) further includes a disconnect panel (52) mounted on the fan case (32) to extend radially outwardly therefrom, **characterised in that** the disconnect panel (52) comprises angled portions (56, 58) and forms a fire wall between the first and second zones and also forms a mounting and a disconnect means for pipes and harnesses (44) to cross the disconnect panel (52) at an angle of approximately 90°.

2. A gas turbine engine (10) according to Claim 1 **characterised in that** the disconnect panel (52) is mounted to extend downwardly from the fan case (32), when the engine (10) is in its normal orientation as mounted on an aircraft.

3. A gas turbine engine (10) according to any preceding claim **characterised in that** the disconnect panel (52) is mounted on a rear part of the fan case (32).

4. A gas turbine engine (10) according to any preceding claim **characterised in that** the disconnect panel (52) includes side portions (58) which are planar and which are angled at between 30° and 60° to the axial direction of the engine (10).

5. A gas turbine engine (10) according to Claim 4 **characterised in that** the side portions (58) each lie in a respective generally vertical plane.

6. A gas turbine engine (10) according to Claim 4 or Claim 5 **characterised in that** the disconnect panel (52) further includes a mid-portion (56) which joins the side portions (58) and which is planar and oriented at about 90° to the axial direction of the engine (10).

7. A gas turbine engine (10) according to any of Claims 4 to 6 **characterised in that** the disconnect panel (52) further includes a mounting portion (53) adapted for attachment to the fan case (32).

8. A gas turbine engine (10) according to Claim 7 **characterised in that** the mounting portion (53) extends back from the mid-portion (56) at a top of the disconnect panel (52) and lies in a plane that is generally perpendicular to the plane of the mid-portion (52).

9. A gas turbine engine (10) according to any preceding claim **characterised in that** the disconnect panel (52) comprises a material which is able to withstand 1100°c for 15 minutes with a standard flame producing 116k W/m²±10kW/m².

10. A gas turbine engine (10) according to any preceding claim, **characterised in that** the gas turbine engine (10) further includes a radial drive (48) connecting a turbine drive shaft to a gearbox (49) mounted on the fan case (32), the radial drive (48) passing through the fan case (32).

11. A gas turbine engine (10) according to Claim 10 **characterised in that** a bellow-seal (60) is provided between the radial drive (48) and the fan case (32).

12. A gas turbine engine (10) according to Claim 10 or Claim 11 **characterised in that** the seal (60) is fireproof.

## Patentansprüche

1. Gasturbinentriebwerk (10) mit einer ersten Feuerzone (Zone 3) im Kernbereich des Triebwerks (10) und mit einer zweiten Feuerzone (Zone 1) im Bereich eines Fangehäuses (32) des Triebwerks (10), bei dem die erste Feuerzone (Zone 3) von der zweiten Feuerzone (Zone 1) durch Feuerschutzwände getrennt ist; wobei die erste Feuerzone (Zone 3) allgemein radial innerhalb der zweiten Feuerzone (Zone 1) angeordnet ist aber einen Verzweigungsteil aufweist, der sich radial von der übrigen Zone über einen begrenzten Umfangsbereich nach außen erstreckt; und wobei das Triebwerk (10) weiter ein am Fangehäuse (32) montiertes Abtrennelement (52) aufweist, die sich radial von diesem nach außen erstreckt, **dadurch gekennzeichnet, dass** das Abtrennelement (52) abgewinkeltre Abschnitte (56,58) aufweist und eine Brandschutzwand zwischen der ersten und der zweiten Zone bildet und das außerdem Mittel zur Montage und Abtrennung der Rohre und Kabelstränge (44) bildet, die das Abtrennelement (52) unter einem Winkel von etwa 90° durchkreuzen.

2. Gasturbinentriebwerk (10) nach Anspruch 1, **dadurch gekennzeichnet, dass** das Abtrennelement (52) derart montiert ist, dass es sich von dem Fangehäuse (32) nach unten erstreckt, wenn sich das Triebwerk (10) in seiner normalen Orientierung bei Einbau im Flugzeug befindet.

3. Gasturbinentriebwerk nach einem der vorigen Ansprüche, **dadurch gekennzeichnet, dass** das Abtrennelement (52) am hinteren Teil des Fangehäuses (32) montiert ist.

4. Gasturbinentriebwerk (10) nach einem der vorherigen Ansprüche, **dadurch gekennzeichnet, dass** das Abtrennelement (52) Seitenabschnitte (58) aufweist, die eben ausgebildet sind und unter einem Winkel zwischen 30° und 60° zur Axialrichtung des Triebwerks (10) angestellt sind.

5. Gasturbinentriebwerk (10) nach Anspruch 4, **dadurch gekennzeichnet, dass** die Seitenabschnitte (58) jeweils in einer zugehörigen, allgemein vertikalen Ebene liegen.

6. Gasturbinentriebwerk (10) nach Anspruch 4 oder Anspruch 5, **dadurch gekennzeichnet, dass** das Abtrennelement (52) weiter einen Mittelabschnitt (56) aufweist, der die Seitenabschnitte (58) verbindet, eben ausgebildet ist und in einem Winkel von etwa 90° zur Axialrichtung des Triebwerks (10) angestellt ist.

7. Gasturbinentriebwerk (10) nach einem der Ansprüche 4 bis 6, **dadurch gekennzeichnett**, dass das Abtrennelement (52) weiter einen Lagerabschnitt (53) aufweist, der zur Festlegung am Fangehäuse (32) dient.

8. Gasturbinentriebwerk (10) nach Anspruch 7, **dadurch gekennzeichnet, dass** der Lagerabschnittt (53) sich vom Kopfende des Mittelabschnitts (56) des Abtrennelementes (52) zurück erstreckt und in einer Ebene liegt, die allgemein senkrecht zur Ebene des Mittelabschnitts (56) verläuft.

9. Gasturbinentriebwerk (10) nach einem der vorherigen Ansprüche, **dadurch gekennzeichnet, dass** das Abtrennelement (52) aus einem Material besteht, das in der Lage ist Temperaturen von 1100°C 15 Minuten lang bei einer Standardflamme stand zuhalten, die 116 kW/m²±10 kW/m² erzeugt.

10. Gasturbinentriebwerk (10) nach einem der vorigen Ansprüche, **dadurch gekennzeichnet, dass** das Gasturbinentriebwerk (10) einen Radialtrieb (48) aufweist, der eine Turbinenantriebswelle mit einem Getriebe (49) verbindet, das am Fangehäuse (32) montiert ist, wobei der Radialtrieb (48) durch das Fangehäuse (32) hindurch verläuft.

11. Gasturbinentriebwwerk (10) nach Anspruch 10, **dadurch gekennzeichnet, dass** eine Balgendichtung (60) zwischen dem Radialtrieb (48) und dem Fangehäuse (32) vorgesehen ist,

12. Gasturbinentriebwerk (19) nach Ansruch 10 oder Anspruch 11, **dadurch gekennzeichnet, dass** die Dichtung (60) feuerfest ist.

## Revendications

1. Moteur à turbine à gaz (10) comprenant une première zone (Zone 3) dans la région d'un coeur du moteur (10) et une deuxième zone de feu (Zone 1) dans la région d'un carter de soufflante (32) du moteur (10), les première (Zone 3) et deuxième (Zone 1) zones de feu étant séparées par des cloisons pare-feu ; la première zone de feu (Zone 3) est positionnée généralement radialement vers l'intérieur de la deuxième zone de feu (Zone 1) mais comprend une partie de bifurcation qui s'étend radialement vers l'extérieur du reste de la zone sur une étendue circonférentielle limitée ; le moteur (10) comprend en outre un panneau de déconnexion (52) monté sur le carter de soufflante (32) pour s'étendre radialement vers l'extérieur à partir de ce dernier, **caractérisé en ce que** le panneau de déconnexion (52) comprend des parties coudées (56, 58) et forme une cloison pare-feu entre les première et deuxième zones et forme également un dispositif de montage et des moyens de déconnexion pour que les tuyaux et les faisceaux de conducteur (44) traversent le panneau de déconnexion (52) selon un angle d'approximativement 90°.

2. Moteur à turbine à gaz (10) selon la revendication 1, **caractérisé en ce que** le panneau de déconnexion (52) est monté pour s'étendre vers le bas à partir du carter de soufflante (32), lorsque le moteur (10) est dans son orientation normale lorsqu'il est monté sur un avion.

3. Moteur à turbine à gaz (10) selon l'une quelconque des revendications précédentes, **caractérisé en ce que** le panneau de déconnexion (52) est monté sur une partie arrière du carter de soufflante (32).

4. Moteur à turbine à gaz (10) selon l'une quelconque des revendications précédentes, **caractérisé en ce que** le panneau de déconnexion (52) comprend des parties latérales (58) qui sont planes et qui sont coudées entre 30° et 60° par rapport à la direction axiale du moteur (10).

5. Moteur à turbine à gaz (10) selon la revendication 4, **caractérisé en ce que** les parties latérales (58) se trouvent chacune dans un plan respectif généralement vertical.

6. Moteur à turbine à gaz (10) selon la revendication 4 ou la revendication 5, **caractérisé en ce que** le panneau de déconnexion (52) comprend en outre une partie intermédiaire (56) qui assemble les parties latérales (58) et qui est plane et orientée à environ 90° par rapport à la direction axiale du moteur (10).

7. Moteur à turbine à gaz (10) selon l'une quelconque des revendications 4 à 6, **caractérisé en ce que** le panneau de déconnexion (52) comprend en outre une partie de montage (53) adaptée pour la fixation sur le carter de soufflante (32).

8. Moteur à turbine à gaz (10) selon la revendication 7, **caractérisé en ce que** la partie de montage (53) s'étend vers l'arrière à partir de la partie intermédiaire (56) au niveau d'une partie supérieure du panneau de déconnexion (52) et se trouve dans un plan qui est généralement perpendiculaire au plan de la partie intermédiaire (52).

9. Moteur à turbine à gaz (10) selon l'une quelconque des revendications précédentes, **caractérisé en ce que** le panneau de déconnexion (52) comprend un matériau qui peut résister à 1100 °C pendant 15 minutes avec une flamme standard produisant 116 kW/m² ± 10 kW/m².

10. Moteur à turbine à gaz (10) selon l'une quelconque des revendications précédentes, **caractérisé en ce que** le moteur à turbine à gaz (10) comprend en outre un entraînement radial (48) raccordant un arbre d'entraînement de turbine à un boîtier d'engrenages (49) monté sur le carter de soufflante (32), l'entraînement radial (48) passant par le carter de soufflante (32).

11. Moteur à turbine à gaz (10) selon la revendication 10, **caractérisé en ce qu'**un soufflet d'étanchéité (60) est prévu entre l'entraînement radial (48) et le carter de soufflante (32).

12. Moteur à turbine à gaz (10) selon la revendication 10 ou la revendication 11, **caractérisé en ce que** le joint d'étanchéité (60) est résistant au feu.
